# EUROPEAN PATENT APPLICATION

(11) **EP 1 624 409 A1**
(43) Date of publication of application: **08.02.2006**
(21) Application number: 05254848.4
(22) Date of filing: 03.08.2005
(51) Int. Cl.: G06Q 10/00

(54) **Controlling distribution of information in a mobile telecommunications network**

(30) Priority: 06.08.2004 GB 0417584
(71) Applicant: Vodafone Group PLC, Newbury Berkshire RG14 2FN (GB)
(72) Inventor: Brick, Patrick, Hammersmith London W6 OEZ (GB); Papadoglou, Nick, Reading, RG30 2ER (GB); Gasparroni, Max, Swindon, SN25 4GS (GB)
(74) Representative: Foster, Mark Charles

(57) **Abstract**

A seller mobile terminal 1 wishes to sell an item of merchandise or service, for example a property. Brief details of this property are stored on directory server 19. Buyer mobile terminal 11, after authentication with the mobile telecommunications network 3 in the conventional manner using its SIM 15, is able to browse details of the seller mobile terminal 1 property and other properties on the directory server 19. Buyer mobile terminal may select one or more properties of interest and may receive a mobile terminal identifier of the seller mobile terminal from the directory server (via link C). This identifier can then be used to initiate a direct (peer-2-peer) communication session (link D) between the buyer mobile terminal 11 and the seller mobile terminal 1, during which more details of the property can be provided to the buyer mobile terminal 11. These details may be pre-stored in the seller mobile terminal 1, which can be automatically provided by an asynchronous communication session. Alternatively, an interactive communication session between the buyer mobile terminal 11 and the seller mobile terminal 1 may be initiated, during which, for example, the user of the buyer mobile terminal directs user of the seller mobile terminal to take the video images of areas of the property of particular interest for transmission during that communication session to the buyer mobile terminal 11. Optionally property data downloaded to buyer mobile terminal 11 may be onwardly transmitted to other buyer mobile terminal 13, subject to the control of the seller mobile terminal 1 by digital rights management.

## Description

The present invention relates to a method of controlling the distribution of information relating to goods or services using a mobile telecommunications network, a method of operating a mobile telecommunications network to control the distribution of information relating to goods or services to a plurality of buyer terminals and also to a mobile telecommunications network operable in accordance with these methods.

When a person is looking for a property to purchase or rent, generally one of two known methods will be used to attempt to identify a suitable property. The person may contact the office of an estate agent. Alternatively, the person may use the Internet to view estate agents' descriptions of properties on a website. Visiting estate agents' offices is time consuming and inconvenient. Using a website to browse descriptions of properties may be more convenient. However, generally the information concerning a property is fixed and does not change with time (that is, it is not updated by the estate agent). Also, the information available is often limited, and a potential purchaser or tenant may not be able to obtain information in which they are particularly interested.

One of the reasons that the details of properties are not routinely updated is that this requires the uploading of revised information to the relevant web server by the estate agent or vendor.

In order to avoid the fees charged by estate agents some sellers or renters seek to advertise and sell/rent their properties privately (that is, with a direct transaction with the purchaser/tenant, rather than via an estate agent).

Typically, the vendor will advertise the property in a newspaper or magazine and/or by uploading details of their property to a suitable website.

Although undoubtedly significant cost savings can be made by attempting to sell or rent a property privately, such an arrangement is not often used. There are probably several reasons for this. One of these is that the information provided by the seller/renter may often be limited or of poor quality and is therefore unappealing to buyers/renters. The primary reason is probably, however, the sellers'/renters' reluctance to have strangers (who may not be genuine purchasers/renters) visiting their property.

The present invention seeks to provide an arrangement which will overcome or mitigate these problems and disadvantages.

According to a first aspect of the present invention, there is provided a method of controlling the distribution of information relating to goods or services using a mobile telecommunications network, the method including establishing at a plurality of seller terminals data relating to respective goods or services; transmitting a selection of the data from each of the terminals to a data store; enabling a buyer terminal to access the data store to browse the data store therein and to select a goods or service of interest; authenticating the buyer terminal with the mobile telecommunications network; and, in response to the selection of goods or services of interest, transmitting to the buyer terminal identity data for allowing the seller terminal to be addressed by the buyer terminal for data exchange between the buyer and seller terminals to facilitate a transaction relating to the goods or services of interest.

The terms "goods and services" used in the claims of this patent specification should be interpreted broadly, and covers anything that has a commercial value, such as a dwelling (house, flat etc.) whether for outright purchase, lease or rent; any other items of property (for example vehicles, furniture, clothes etc.). This term also covers services - for example, services provided by a decorator or gardener in exchange for payment.

In the embodiment to be described the selected data transmitted from a seller terminal to the data store comprises fairly brief details of the goods or service. In the example where the goods or service is a dwelling, this information might conveniently comprise the approximate location of the dwelling (for example street name or post code), the price of the dwelling (sale or rental price per month) and the type of accommodation provided by the dwelling (number of bedrooms, bathrooms, reception rooms, private garden, etc.). A buyer terminal, when browsing this data from the data store will be able to identify items of interest. The buyer terminal is then provided with identity data which allows the buyer mobile terminal to contact the seller mobile terminal directly. In this way a peer-to-peer communication session can be established between the buyer mobile terminal and the seller mobile terminal. This may allow the buyer mobile terminal to obtain further information about the dwelling (for example, images, room measurements, etc.). It is envisaged that this data will be regularly updated by the seller (for example, following redecoration). Such data may be provided in an asynchronous connection - that is, data is downloaded from the seller terminal to the buyer terminal without requiring any action of the user of the seller terminal. It is also possible for the buyer terminal to make specific requests for data from the seller terminal, that will require action of the user of the seller terminal. For example, the buyer terminal may ask for an image of a particular part of the dwelling, which can be captured by the user of the seller terminal and transmitted to the buyer terminal in response to the buyer's request.

Because in the embodiment the buyer mobile terminal is authenticated with the mobile telecommunications network before the latter transmits the identity data that allows the seller terminal to be addressed, the seller mobile terminal can be confident that they will not be contacted by an unauthenticated party. Also, a record of to which buyer mobile terminals a seller's identity data have been distributed can be maintained so that redress may be obtained against the user of a buyer mobile terminal that abuses the identity data.

Mobile telecommunications networks such as GSM/GPRS and UMTS (3G) networks provide the terminals registered therewith with a subscriber identity module (SIM) which contains data for authenticating the mobile terminal with the mobile telecommunications network. This provides a reliable method of authenticating a buyer terminal using the infrastructure of existing mobile telecommunications networks, and significantly improves the security of sellers of items, as they no longer need to fear contact from unauthenticated parties.

According to a second aspect of the present invention, there is provided a method of operating a mobile telecommunications network to control the distribution of information relating to goods or services to a plurality of buyer terminals, the method including establishing at a plurality of seller terminals data relating to respective goods or services; transmitting a selection of the data from each of the seller terminals to a data store; enabling the buyer terminals to access the data stored to browse the data stored therein and to select goods and services of interest; authenticating the buyer terminals with the mobile telecommunications network; and in response to the selection of goods or services of interest, transmitting to the buyer terminal identity data for allowing the seller terminal to be addressed by the buyer terminal for data exchange between the buyer and seller terminals to facilitate a transaction relating to the goods or service of interest.

The method steps recited in the independent claims of this application may be performed in any order, and the method is not restricted to the order of method steps specified in the claims.

According to a third aspect of the present invention, there is provided a mobile telecommunications network including a plurality of terminals registered therewith; means for authenticating each of the mobile terminals with the mobile telecommunications network; a data store for storing data received from seller terminals relating to goods or services and operable to allow a buyer terminal to browse the data and to select good and service of interest, in response to which selection from an authenticated buyer terminal identity data is transmitted to the buyer terminal for allowing the seller terminal to be addressed by the buyer terminal for data exchange between the buyer and seller terminals to facilitate a transaction relating to the good or service of interest.

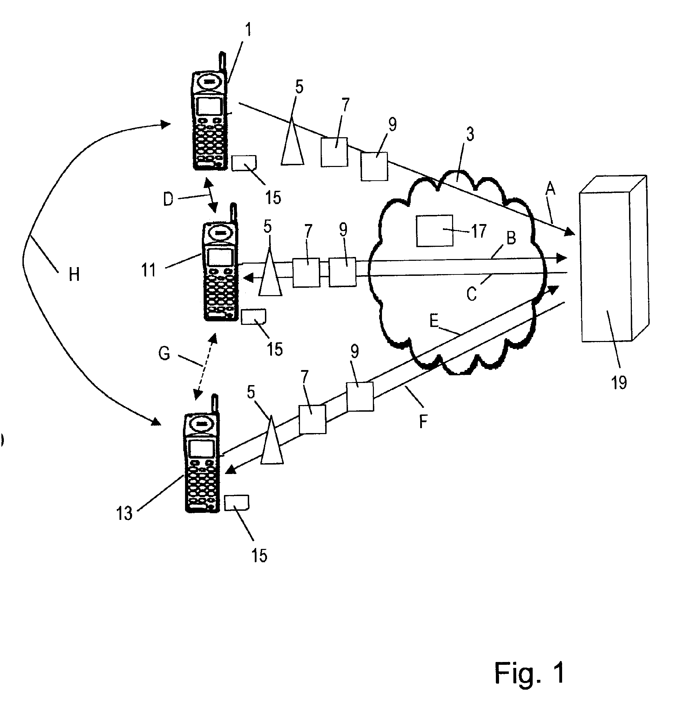

A method of controlling the distribution of information relating to goods or services using a mobile telecommunications network, a method of operating a mobile telecommunications network to control the distribution of information relating to goods or services to a plurality of buyer terminals, and a mobile telecommunications network, embodying the invention, will now be described with reference to the accompanying drawing, the single figure of which shows schematically a mobile telecommunications network and the elements coupled thereto in accordance with the invention.

The user of mobile terminal 1 wishes to sell their house.

The mobile terminal 1 is registered with GSM/GPRS or UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the network 3, comprising, in the case of a UMTS network, base station (Node B) 5, and radio network controller (RNC) 7. Communications between the mobile terminal 1 and the network 3 are routed from the radio access network via GPRS support nodes (S/GGSN) 9, which may be connected by a fixed (cable) link to the network 3.

Herein the mobile terminal 1 is referred to as the "seller terminal" as in this embodiment the user of mobile terminal 1 wishes to sell their house.

In the conventional manner, a multiplicity of mobile terminals are registered with the network 3. These mobile terminals include mobile terminals 11 and 13 of users interested in purchasing a house - and hereinafter referred to as "buyer terminals". The buyer terminals 11 and 13 communicate with the network 3 in a similar manner to the terminal 1, that is via an appropriate Node B 5, RNC 7 and S/GGSN 9.

Each of the terminals 1,11 and 13 is provided with a respective subscriber identity module (SIM) 15. During the manufacturing process of each SIM authentication information is stored thereon under the control of the network 3. The network 3 itself stores details of each of the SIMs issued under its control. In operation of the network 3, a terminal 1, 11, 13 is authenticated (for example, when the user activates the terminal in the network with a view to making or receiving calls) by the network sending a challenge to the terminal 1,11,13 incorporating a SIM 15, in response to which the SIM 15 calculates a reply (dependent on the predetermined information held on the SIM - typically an authentication algorithm and a unique key Ki) and transmits it back to the network 3. The network 3 includes an authentication processor 17 which generates the challenge and which receives the reply from the terminal 1,11,13. Using information pre-stored concerning the content of the relevant SIM 15, the authentication processor calculates the expected value of the reply from the mobile terminal 1,11,13. If the reply received matches the expected calculated reply, the SIM 15 and the associated mobile terminal are considered to be authenticated.

It should be understood that, in accordance with the invention, such an authentication process can be performed for any terminal provided with a SIM 15 under control of the network 3. In the embodiment the terminal communicates wirelessly with the network 3 via the network's radio access network, although this is not essential. For example, the terminal may communicate with the network via the fixed telephone network (PSTN) and/or via the Internet.

The SIM 15 used by the terminal 1,11,13 may be a SIM of the type defined in the GSM or UMTS standards specifications, or may be a simulation of a SIM - that is, software or hardware that performs a function corresponding to that of the SIM.

It should be noted that the authentication process being described does not necessarily authenticate the human identity of the user. For example, mobile telecommunication networks have pre-pay subscribers who are issued with SIMs in return for pre-payment, enabling them to use network services. However, the identity of such pre-pay subscribers may not be known by the network. Nevertheless, such a user cannot make use of the network until the network has authenticated the user's SIM - that is, has confirmed that such user is a particular user who has a particular pre-paid account with a network.

However, in the present embodiment, it is preferable that the human identity of the holder of the SIM 15 is known to the network 3 as this provides a useful security feature, as will be explained in more detail below.

In order to allow potential purchasers of the house of the user of mobile terminal 1, appropriate details are obtained, compiled or collated by the user of mobile terminal 1 and are input to that terminal so that they are available in electronic form. For example, such details might include a written description of the house similar to that conventionally compiled by an estate agent. Such details may also include still or moving images of the property. For example, these images may be captured by a digital camera built in to the mobile terminal or may be downloaded from a separate device. The details may further or alternatively include digitally recorded speech of the user, describing features of the property. The user is free to include details of his or her choosing. These details can be updated when necessary or appropriate - for example, to reflect changes to the house (such as redecoration) or to update pictures of the garden due to changing of the season.

In accordance with a feature of the present embodiment a directory server 19 is provided for managing details of properties that subscribers to the network 3 (and possibly other entities) wish to sell or rent.

The user of seller terminal 1 is able to store selected details concerning their house on directory server 19 by sending these, for example, via the radio access network of the network 3 (by link A). The network server 19 may be part of the network, may be separate but controlled by the network, or may be independent of the network.

The information stored on the directory server may be selected by the user of the seller mobile terminal, but advantageously is of a predetermined type and format. For example, the data stored would be data that a potential purchaser of a property would require to make an initial assessment of whether a property might be of interest. This information would typically include the price of the property, the approximate location of the property and the type of accommodation that the property provides. For example, data stored on the directory server 19 may be as follows.

| Property type | Property Price | Post Code | No. of bedrooms |
|---|---|---|---|
| Flat | £100,000 | UB10 | 2 |
| Terraced House | £200,000 | UB1 | 3 |
| Detached House | £300,000 | UB5 | 4 |

The data stored in the directory server is generally data that will not change or will change infrequently. If desired, the seller terminal 1 can update this data. This may be desirable, for example, if the seller wishes to vary the price. It should be noted that the data concerning the property stored on the directory server 19 is different from the data stored on the seller terminal 1 relating to the property. There may be some commonality between the data, but generally the data stored on the seller terminal 1 will be considerably more extensive.

The data stored on directory server 19 may be transmitted from the seller mobile terminal 1 by any suitable mechanism, such as by SMS message, MMS message or GPRS.

The user of seller mobile terminal 1 may pay a fee to the network 3 and/or the operator of directory server 19 to allow details of their property to be made available on directory server 19. This fee may be a special fee levied for use of the service, or the charges rendered by the network for transmission of the data to the directory server may be considered to be payment for the service.

By a mobile terminal 11 (and by a mobile terminal 13) a user may register for the service of obtaining property details from the directory server 19, and may make a payment for use thereof.

The user of buyer mobile terminal 11 initiates a communication session with the directory server 19 via the radio access network of network 3 (although this could be via another communications link) to browse the details of properties stored on the directory server 19 (by link B). This browsing could be facilitated by a WAP browser provided on the buyer mobile terminal 11 and a GPRS/UMTS link with the network 3 and an Internet link between the network 3 and the directory server 19. The user of the buyer mobile terminal 11 is therefore able to consult brief details of the type described above of the property of the user of seller mobile terminal 1 and numerous other properties whose details are stored on directory server 19. These other property details may be provided by other subscribers to the network 3, although it is possible for the details to come from other sources too. An appropriate search engine may be provided to allow the user of buyer mobile terminal 11 to filter the property details stored on the directory server 19 so that, for example, the user is only presented with details of properties in a certain price range and/or geographical area. A customised user view, for example by location area, could be used to enhance the user experience by saving the user the trouble of reentering the same search details on subsequent searches. When the user of buyer mobile terminal 11 sees details of a property that is of potential interest, this property is selected. The directory server 19 then issues a message C for transmission by the network 3 to the buyer mobile terminal 11 which includes an identifier of the seller mobile terminal 1. This identifier may be any suitable identifier, such as the MSISDN (telephone number) of mobile terminal 1 or its IMSI.

The seller of mobile terminal 11 may use this identifier to automatically retrieve further information about the property from the seller mobile terminal 1 and/or to initiate a communication with the user of seller mobile terminal 1. Such communications are direct communications (link D) between the buyer mobile terminal 11 and the seller mobile terminal 1 (that is, they are not routed via the directory server 19 or another intermediary). Of course, the direct communication between the buyer terminal 11 and the seller terminal 1 will be by means of a suitable communication medium. In this embodiment the communication is via the radio access network of the mobile telecommunications network 3 - for example a GPRS/UMTS communication session, Session Initiation Protocol (SIP) communication session or voice call, or maybe by another wireless link such as WLAN or Bluetooth (RTM) or by a fixed link. The communication between the buyer terminal 11 and the seller terminal 1 is a peer-to-peer communication link.

The buyer mobile terminal 11 may contact the seller mobile terminal 1 and download, for example, by a GRPS/UMTS link, predetermined data that the seller mobile terminal makes freely available in a standard form to potential buyers who have been provided with the identifier of the seller terminal 1 by the directory server 19 (and thus which have been authenticated by the mobile telecommunications network). This is an asynchronous communication session, and does not require any particular action by the user of seller mobile terminal 1. The downloading of the property information may be performed without the knowledge of the seller. The information may correspond to all or part of the "Seller's Pack" as proposed in the U.K. Government's draft Housing Bill.

The third generation partnership project (3GPP) has recently defined a new concept known as IMS (IP-based multimedia subsystem). The aim of IMS is to allow any users such as mobile telephone network operators to provide services to their subscribers as efficiently and effectively as possible. For example, the IMS architecture is likely to support the following communication types: voice, video, instant messaging, "presence" (a user's availability for contact), location-based services, email and web. Further communication types are also possible.

This diverse collection of communication types requires efficient session management due to the number of different application and services that will be developed to support these communication types. The 3GPP has chosen Session Initiation Protocol (SIP) for managing these sessions.

The SIP protocol is a session-based protocol designed to establish IP-based communication sessions between two or more end points or users. Once a SIP session has been established, communication between these end points or users can be carried out using a variety of different protocols (for example, those designed for streaming audio and video). These protocols are defined in the SIP session initiation messages. At the beginning of a SIP communication session, and prior to transmission of image or audio data, the seller terminal 1 may obtain from the buyer terminal 11 media reproduction quality criteria indicative of the ability of the buyer terminal 11 to display received images and reproduce received audio data. In response to the received media reproduction quality criteria the seller terminal 1 may modify (if required) the image/audio data prior to sending the image/audio data to the buyer terminal 11. In this manner, the image/audio data sent to the buyer mobile terminal 11 is adjusted and optimised for the capabilities of the receiving terminal. This will allow for the best quality image/audio to be reproduced on the receiving device and/or will prevent waste of network resources (for example, by not transmitting image data which cannot be displayed by the receiving device). Such an arrangement is described in more detail in the Applicants co-pending United Kingdom Patent Application No. 0320635.6 ("Press to See", P40053GB), the content of which is hereby fully incorporated by reference.

Alternatively, or additionally, the user of the buyer mobile terminal 11 may initiate an interactive or "live" communication session with the user of the seller mobile terminal 1. In its simplest and most conventional form, this communication session may be a simple voice call between the mobile terminals 11 and 1 in which the users discuss details of the property and perhaps arrange an appointment to view the property. Such a voice call could be a conventional circuit switched voice call. However, an interactive SIP session could be initiated between the mobile terminals comprising perhaps an initial exchange of speech data between the users of mobile terminals 11 and 1, and during which session the user of buyer mobile terminal requests the user of seller mobile terminal to send particular images to the buyer mobile terminal 11. These images may be captured during the session by the seller mobile terminal's built in digital camera and transmitted during the session. In this way the potential buyer can guide the potential seller to use their mobile terminal to give a personal real-time video viewing of the seller's property. The availability of the user of the seller mobile terminal to perform such an interactive communication session may be indicated by a "presence" indicator in the known manner.

Buyer mobile terminal 13 may browse the property information on the directory server 19 by a link E in a similar manner to buyer mobile terminal 11. The seller mobile terminal identifiers may be provided by the directory server 19 to the buyer mobile terminal 13 via link F, again in a similar manner to buyer mobile terminal 11. Additionally, or alternatively, the buyer mobile terminal 13 may be able to obtain property data from buyer mobile terminal 11 by a peer-to-peer link G. Buyer mobile terminal 13 may "discover" in an ad hoc manner that mobile terminal 11 has property data of interest via a communication mechanism such as Bluetooth. This ad hoc discovery mechanism results in a non-trusted relationship between mobile terminal 11 and mobile terminal 13 since the directory server 19 is not involved in establishing the link. Such data may correspond in principle to the data downloaded by the peer-to-peer link D between the buyer mobile terminal 11 and the seller mobile terminal 1 described above. However, the data may be reformatted by the negotiation mechanism described above to ensure that it is of a suitable format for the buyer mobile terminal 13. The data may be transmittable from the buyer mobile terminal 11 to the buyer mobile terminal 13 with permission of the seller mobile terminal 1 from which the data originated (or the seller mobile terminal 1 may decide that buyer terminal 11 can transmit the data without explicit permission). This may be achieved by digital rights management (DRM) techniques. For example, the property data may be transmitted by the seller mobile terminal, to the buyer mobile terminal 11 in encrypted form. To decrypt and use the data a key must be obtained from the seller mobile terminal 1. For example, the buyer mobile terminal 11 may send an SMS message to the seller mobile terminal 1 requesting the key to decrypt the data. If, on reception of the SMS message, the user of the seller mobile terminal 1 is happy for the buyer mobile terminal 11 to view the property data, the seller mobile terminal 1 will transmit and reply the key (for example, also in an SMS message). The buyer mobile terminal 13 will need similarly to obtain a key from the seller mobile terminal 1 to decrypt and use the property data. If the user of the seller mobile terminal 1 does not wish the buyer mobile terminal 13 to be able to use the property data, the user of the seller mobile terminal 1 may simply not reply to the received SMS message.

The buyer mobile terminal 13 is also able to obtain property data from the seller mobile terminal 1 by a direct peer-to-peer link H, in a similar manner to the buyer mobile terminal 11 obtaining this data by the direct peer-to-peer link D.

As discussed above, preferably the seller mobile terminal identifier data will only be passed to buyer mobile terminals for which the mobile telecommunications network has knowledge of the person provided with the SIM 15 respective to the relevant buyer mobile terminal. This will usually be the case for subscribers to the mobile network 3, although some subscribers using the network 3 on a pre-pay basis may not have their identity known to the network 3. The user of each seller mobile terminal may have the option of blocking the transmission of their mobile terminal identifier to buyer mobile terminals of this type.

Buyer mobile terminals are only able to retrieve the mobile terminal identifiers from the directory server 19 (and in the embodiment are only able to browse the data from the directory server 19) when they are authenticated with the network 3. In the embodiment this authentication is the conventional authentication that takes place each time the mobile terminal and its associated SIM are activated in the coverage area of the network 3. However, an alternative authentication method may be used, or additional authentication steps may be taken to enable the retrieving of mobile terminal identifiers. The directory server 19 and/or the network 3 may maintain a record of to which buyer terminals seller mobile terminal identifiers are issued. In the event of a user of a buyer mobile terminal acting improperly or misusing the mobile terminal identifier this allows the misbehaving user to be identified and appropriate action taken (for example, suspension of mobile telecommunication services). The user of seller mobile terminal can also be sure that any direct enquiries received from buyer mobile terminals will be from users authenticated by and known to the network 3, and will also know that the network 3 or directory server 19 has a record of the seller terminals identifier being passed to the buyer terminal. This may give the user of seller mobile terminal greater confidence to provide details concerning their property and to allow the user of the buyer mobile terminal to view their property.

The seller mobile terminal will also be authenticated with the network when using the communication services thereof, and the user of the buyer mobile terminal will therefore have greater confidence in communicating with or visiting for the purposes of viewing the user of the seller mobile terminal 1.

By virtue of the subscription with the mobile telecommunications network, payments (typically small or micro payments) may be made between the buyer and seller terminals themselves and between them and the network 3. For example, the seller mobile terminal may make a small charge for providing an interactive video guide to their property, which is debited from the buyer mobile terminal's account with the network 3 and credited to the seller mobile terminal's account. It is also possible for the buyer mobile terminal to purchase the property by this mechanism, although this is not envisaged for such high value items at the present time.

However, the present invention is applicable to the selling of any item or service, and this mechanism for payment may be more practicable for lower value items or services.

## Claims

1. A method of controlling the distribution of information relating to goods or services using a mobile telecommunications network (3), the method including establishing at a plurality of seller terminals (1) data relating to respective goods or services; transmitting a selection of the data from each of the terminals (1) to a data store (19); enabling a buyer terminal (11) to access the data store (19) to browse the data stored therein and to select a goods or service of interest; authenticating the buyer terminal (11) with the mobile telecommunications network (3); and, in response to the selection of goods or services of interest, transmitting to the buyer terminal (11) identity data for allowing the seller terminal (1) to be addressed by the buyer terminal (11) for data exchange between the buyer and seller terminals (11,1) to facilitate a transaction relating to the goods or services of interest.

2. A method of operating a mobile telecommunications network (3) to control the distribution of information relating to goods or services to a plurality of buyer terminals (11), the method including establishing at a plurality of seller terminals (1) data relating to respective goods or services; transmitting a selection of the data from each of the seller terminals (1) to a data store (19); enabling the buyer terminals (11) to access the data store (19) to browse the data stored therein and to select goods and services of interest; authenticating the buyer terminals (11) with the mobile telecommunications network (3); and in response to the selection of goods or services of interest, transmitting to the buyer terminal (11) identity data for allowing the seller terminal (1) to be addressed by the buyer terminal (11) for data exchange between the buyer and seller terminals (11,1) to facilitate a transaction relating to the goods or service of interest.

3. A mobile telecommunications network (3) including a plurality of terminals (1,11) registered therewith; means for authenticating each of the mobile terminals (1,11) with the mobile telecommunications network (3); a data store (19) for storing data received from seller terminals (1) relating to goods or services and operable to allow a buyer (11) terminal to browse the data and to select good and service of interest, in response to which selection from an authenticated buyer terminal (11) identity data is transmitted to the buyer terminal (11) for allowing the seller terminal (1) to be addressed by the buyer terminal (11) for data exchange between the buyer and seller terminals (11,1) to facilitate a transaction relating to the good or service of interest.

4. The method of claim 1 or 2 or the network of claim 3, wherein the data exchange includes the data established at the seller terminal.

5. The method or network of claim 1,2,3 or 4, wherein the data exchange includes responses to queries relating to the good or service of interest.

6. The method or network of claim 1,2,3,4 or 5, wherein the data exchange includes information relating to the good or service of interest obtained at the direction of the buyer terminal.

7. The method or network of any one of claims 1 to 6, wherein the data exchange includes images relating to the good or service of interest.

8. The method or network of any one of claims 1 to 7, including establishing the communication capabilities of at least one of the terminals and performing data exchange therewith in a manner dependent thereon.

9. The method or network of any one of claims 1 to 8, wherein the data exchange comprises the buyer terminal asynchronously obtaining data from the seller terminal.

10. The method or network of claim 9, wherein the buyer terminal asynchronously obtains data without requiring any action of the user of the seller terminal.

11. The method or network of any one of claims 4 to 10, wherein the buyer terminal is able to onwardly transmit the received data established at the seller terminal to another terminal.

12. The method or network of claim 11, wherein the onward transmission is controlled by the seller terminal.

13. The method or network of claim 11, wherein use of the onwardly transmitted data is controlled by the seller terminal.

14. The method or network of claim 13, wherein the use of the onwardly transmitted data is controlled by digital rights management (DRM).

15. The method of any one of claims 1,2 and 4 to 14, including maintaining a record of seller terminal identity data transmitted to buyer terminals.

16. The method of any one of claims 1,2 and 4 to 15, including controlling making a payment for the distribution of data using the mobile telecommunications network.

17. The method of any one of claims 1,2 and 4 to 16, including controlling making a payment for the good or service of interest using the mobile telecommunications network.

18. The network of any one of claims 3 to 14, including means operable to maintain a record of seller terminal identity data transmitted to buyer terminals.

19. The network of any one of claims 3 to 14 and 18, including means for controlling making a payment for the distribution of data using the mobile telecommunications network.

20. The network of any one of claims 3 to 14,18 and 19, including means for controlling making a payment for the good or service of interest using the mobile telecommunications network.

21. The method or network of any one of claims 1 to 20, wherein the data exchange is performed by a peer-to-peer communication channel between the buyer and the seller terminal.

22. The method of any one of claims 1,2,4 to 17 and 21, including providing to the buyer terminal information indicative of the seller terminal's availability for contact.

23. The method of any one of claims 1,2,4 to 17 and 21 to 22, including providing to the seller terminal information indicative of the buyer terminal's availability for contact.

24. The network of any one of claims 3 to 14 and 18 to 21, including means for providing to the buyer terminal information indicative of the seller terminal's availability for contact.

25. The network of any one of claims 3 to 14,18 to 21 and 24, including means for providing to the seller terminal information indicative of the buyer terminal's availability for contact.

26. The method of claim 22 or 23 or the network of claim 24 or 25, wherein the information indicative of the availability for contact comprises the presence data.

27. The method or network of any one of claims 1 to 26, wherein the buyer and/or seller terminals include a smart card or SIM or a simulated smart card or SIM including data for authenticating the terminal with the mobile telecommunications network.

28. The method or network of claim 27, wherein the authentication includes exchanging key data between the terminals in the mobile telecommunications network.

29. The method or network of any one of claims 1 to 28, wherein the mobile telecommunications network comprises a GSM/GPRS or UMTS (3G) mobile telecommunications network.

30. The method or network of any one of claims 1 to 29, wherein the buyer and/or seller terminal communicate wirelessly with the radio access network of the mobile telecommunications network.

31. The method or network of any one of claims 1 to 30, wherein the good or service of interest comprises a dwelling.

32. The method or network of claim 31, wherein the selection of data transmitted to the data store includes data indicative of the location of the dwelling and/or the type of accommodation provided by the dwelling.
